# EUROPÄISCHE PATENTSCHRIFT

(11) **EP 0 693 391 B1**
(45) Veröffentlichungstag und Bekanntmachung des Hinweises auf die Patenterteilung: **09.12.1998**
(21) Anmeldenummer: 95108672.7
(22) Anmeldetag: 06.06.1995
(51) Int. Cl.: B60K 20/02

(54) **Wähleinrichtung für ein Automatikgetriebe eines Kraftfahrzeugs**
Gear selection apparatus for an automatic transmission of a motor vehicle
Dispositif de sélection pour une boîte de vitesses automatique d'un véhicule automobile

(30) Priorität: 23.07.1994 DE 4426207
(43) Veröffentlichungstag der Anmeldung: 24.01.1996
(73) Patentinhaber: Bayerische Motoren Werke Aktiengesellschaft, 80788 München (DE)
(72) Erfinder: Wöste, Norbert, D-80939 München (DE); Neuner, Josef, D-83064 Raubling (DE)

(56) Entgegenhaltungen:
- EP-A- 0 413 116
- EP-A- 0 565 400
- DE-A- 3 613 856
- DE-A- 3 717 675
- US-A- 4 987 792
- US-A- 5 243 871
- ATZ - AUTOMOBILTECHNISCHE ZEITSCHRIFT Bd. 96, Nr. 9, 1994, Seiten 512 - 526 KOCOKAY, F.; NEUNER, J. 'DIE NEUE ÄUSSERE SCHALTUNG VON BMW FÜR AUTOMATIKGETRIEBE'

## Beschreibung

Die Erfindung betrifft eine Wähleinrichtung für ein Automatikgetriebe eines Kraftfahrzeugs nach dem Oberbegriff des Anspruchs 1.

Es ist bereits bekannt, ein Automatikgetriebe und seine Wähleinrichtung so zu gestalten, daß der Fahrer mit der Wähleinrichtung die Möglichkeit hat, sich für Schrittschaltbetrieb oder Fahrstufenautomatik zu entscheiden.

Bei der Fahrstufenautomatik ist der Betriebsbereich des Automatikgetriebes in verschiedene, manuell vorwählbare Betriebsstufen unterteilt, die als Fahrstufen bezeichnet werden. Der Begriff Fahrstufen, wie er hier verwendet wird, umfaßt alle Betriebsstufen eines Automatikgetriebes, also auch die Park- oder Neutralposition.

Im Schrittschaltbetrieb wird das Automatikgetriebe vom Fahrer manuell geschaltet. Er kann durch Verschwenken des Wählhebels aus einer Mittelstellung heraus jeweils einen Gang hoch- oder zurückschalten, je nachdem in welche Richtung er den Wählhebel bewegt. Nach jedem Schaltvorgang stellt sich der Wählhebel in seine Mittelstellung zurück.

Eine solche Wähleinrichtung beschreibt die EP-0 413 116 A1, die relativ kompliziert aufgebaut ist und groß baut.

Da der Einbauraum für die Wähleinrichtung im Kraftfahrzeug begrenzt ist, sollte diese möglichst kompakt und klein sein.

Daher ist es Aufgabe der Erfindung, eine Wähleinrichtung für ein Automatikgetriebe eines Kraftfahrzeugs so zu gestalten, daß sie aus möglichst wenig Teilen kompakt und klein aufgebaut ist.

Die Aufgabe wird erfindungsgemäß mit den Merkmalen des Anspruchs 1 gelöst. Weitere Ausgestaltungen der Erfindung ergeben sich aus den Unteransprüchen.

Die Erfindung hat den Vorteil, daß der Wählhebel sehr kurz sein kann und trotzdem eine ausreichende Querbewegung möglich ist. Dies deshalb, da die zweite Achse, um die der Wählhebel in Fahrzeugquerrichtung schwenkbar ist, erfindungsgemäß im fahrzeugfesten Rahmen in einer entsprechenden Höhe angeordnet werden kann. Ebenso können die weiteren Bauteile der Wähleinrichtung einfach um diese fahrzeugfeste Lagerung des Wählhebels herum, platzsparend und kompakt angeordnet werden, wenn die Wähleinrichtung so aufgebaut ist, daß die zweite Achse durch eine Kulisse gebildet wird, an der der Wählhebel über die erste Achse gelagert ist. Diese Kulisse kann beim Schwenken des Wählhebels von einer Schaltgasse in die andere mit dem Wählhebel mitgeschwenkt werden. Desweiteren können die Bauteile so einfach gestaltet und angeordnet werden, daß sie mehrere Funktionen übernehmen.

Für einen kurzen, platzsparenden Wählhebel ist es zusätzlich wichtig, die fahrzeugfeste Lagerung über die zweite Achse mindestens in gleicher Höhe einer ersten Achse auszuführen, um die der Wählhebel in Fahrzeuglängsrichtung schwenkbar gelagert ist. Daher sieht eine bevorzugte Ausführung der Erfindung vor, beide Achsen des Wählhebels um die dieser kardanisch schwenkbar, fahrzeugfest gelagert ist, in dieselbe horizontale Ebene zu legen. Dies ergibt eine besonders kompakt bauende Wähleinrichtung.

Weitere vorteilhafte Ausführungen der Erfindung optimieren diese zusätzlich hinsichtlich des Raumbedarfs und der Anzahl der Bauteile. Ebenso wird ein noch einfacherer Aufbau erreicht, der die Fertigungs- und Montagekosten der Wähleinrichtung senkt und ihr zuverlässiges Funktionieren gewährleistet.

Die Rastmittel zum Festlegen der Schaltgassen können dabei einfach an Kulisse und fahrzeugfestem Rahmen ausgebildet werden, sowie die Anschlagfläche, die die Längsbewegung des Wählhebels an der Stelle beschränkt, an der seine Querbewegung möglich ist. Zwischen Wählhebel, der Kulisse und einem in Längsrichtung schwenkbaren Betätigungshebel, dessen Achse vorteilhafterweise kongruent zu der ersten Achse des Wählhebels in der Schaltgasse zum Vorwählen der einzelnen Fahrstufen liegt, kommen verschiedene Wirkflächen zur Betätigung der Schrittschaltung oder der Fahrstufenwähleinrichtung formschlüssig miteinander in Eingriff. Alle Verriegelungs- und Betätigungsfunktionen für den Wählhebel werden durch Wirkflächen an Wählhebel, Kulisse und Betätigungshebel gesteuert, was den sehr einfachen Aufbau der Wähleinrichtung ermöglicht.

Ein bevorzugtes Ausführungsbeispiel der Erfindung ist in der nachfolgenden Beschreibung und der zugehörigen Zeichnung näher dargestellt. Es zeigen
- Figur 1: einen Querschnitt durch eine Wähleinrichtung mit einem in zwei Schaltgassen verschwenkbaren Wählhebel in der Schaltgasse der Fahrstufenautomatik,
- Figur 2: die Wähleinrichtung in einer Draufsicht und
- Figur 3: die an Kulisse und Rahmen ausgebildeten Rastmittel zum Festlegen der Schaltgassen in einem Teilschnitt.

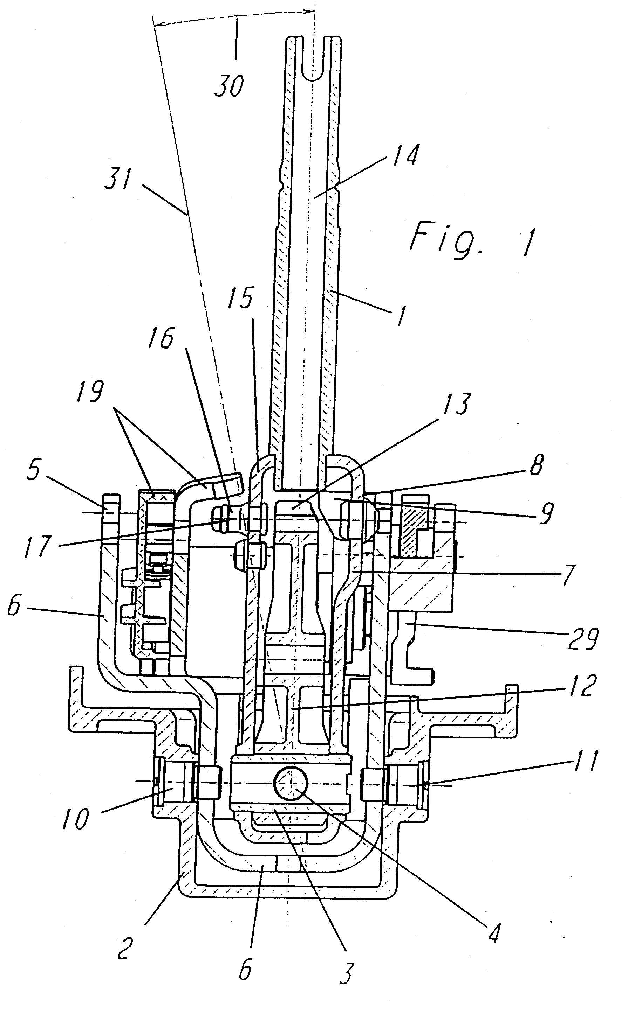

Nach Figur 1 ist ein Wählhebel 1 einer Wähleinrichtung für ein nicht dargestelltes Automatikgetriebe eines Kraftfahrzeugs in einem fahrzeugfesten Rahmen 2 über eine erste Achse 3 und eine zweite Achse 4 kardanisch beweglich gelagert. Die erste Achse 3 erstreckt sich in Fahrzeugquerrichtung und ermöglicht eine Bewegung des Wählhebels 1 in Fahrzeuglängsrichtung zum vorwählen der einzelnen Fahrstufen oder Schalten der Gänge in Schrittschaltung. Die zweite Achse 4 erstreckt sich in Fahrzeuglängsrichtung und bildet damit die Schwenkachse des Wählhebels 1, um die dieser in Fahrzeugquerrichtung von einer Schaltgasse zum vorwählen der Fahrstufen in eine Schaltgasse für Schrittschaltung geschwenkt werden kann.

Der Schwenkwinkel 30 des Wählhebels 1 ist durch die zusätzlich eingezeichnete Mittellinie 31 für seine in die Schrittschaltgasse geschwenkte Lage angedeutet. In Figur 1 befindet sich der Wählhebel 1 in der Schaltgasse zum Vorwählen der Fahrstufen. In dieser Schaltgasse können durch die Schwenkbewegung des Wählhebels 1 um die erste Achse 3 nacheinander mindestens die einzelnen Fahrstufen P, R, N und D eingelegt werden. Über ein nicht gezeichnetes, an einer Bohrung 5 eines Betätigungshebels 6 angelenktes Wählseil, wird die Bewegung des Wählhebels 1 in der Fahrstufenwählgasse zum Automatikgetriebe übertragen. Der Wählhebel 1 ist dazu formschlüssig mit dem Betätigungshebel 6 verbunden. Diese Verbindung entsteht durch sein Verschwenken aus der Schrittschaltgasse in die Fahrstufenwählgasse. Dabei schwenkt ein Schenkel 7 mit an ihm ausgebildeten zweiten Wirkflächen 8 in dritte Wirkflächen 9 des an dieser Stelle U-förmig ausgebildeten Betätigungshebels 6 ein. Damit sich der Betätigungshebel 6 mit dem Wählhebel 1 ohne Gleitbewegung zwischen den zweiten Wirkflächen 8 und den dritten Wirkflächen 9 bewegt, ist der Betätigungshebel 6 im Rahmen 2 über eine Achse aus zwei Achshälften (10, 11) schwenkbar festgelegt, deren Drehachse mit der der ersten Achse 3 des Wählhebels 1 in der Schaltgasse zum Vorwählen der einzelnen Fahrstufen kongruent ist.

Der Betätigungshebel 6 umgreift U-förmig den unteren Teil des Wählhebels 1 so, daß trotz den deckungsgleichen Schwenkachsen in Fahrzeuglängsrichtung von Wählhebel 1 und Betätigungshebel 6, der Wählhebel 1 im Betätigungshebel 6 um die zweite Achse 4 geschwenkt werden kann. Dabei werden die erste Achse 3 und der Wählhebel 1, sowie eine vom unteren O-förmigen Teil des Wählhebels 1 umgriffene Kulisse 12 um den Schwenkwinkel gedreht. Drehachse ist die zweite Achse 4, die in derselben Ebene liegt wie die erste Achse 3 und von der Kulisse 12 gebildet wird. Die erste Achse 3 ist in der Kulisse 12 gelagert. Desweiteren besitzt die Kulisse 12, die sich von ihrer Lagerstelle im Rahmen 2 nach oben erstreckt, an ihrer oberen Fläche Rastnasen 13, die mit einer nicht gezeichneten, am Wählhebel ausgebildeten Sperreinrichtung zusammenwirken. Die Sperreinrichtung verläuft durch eine Bohrung 14 des Wählhebels 1 hindurch und kann zum Beispiel mit einer Taste am nicht gezeichneten Wählhebelgriff betätigt werden.

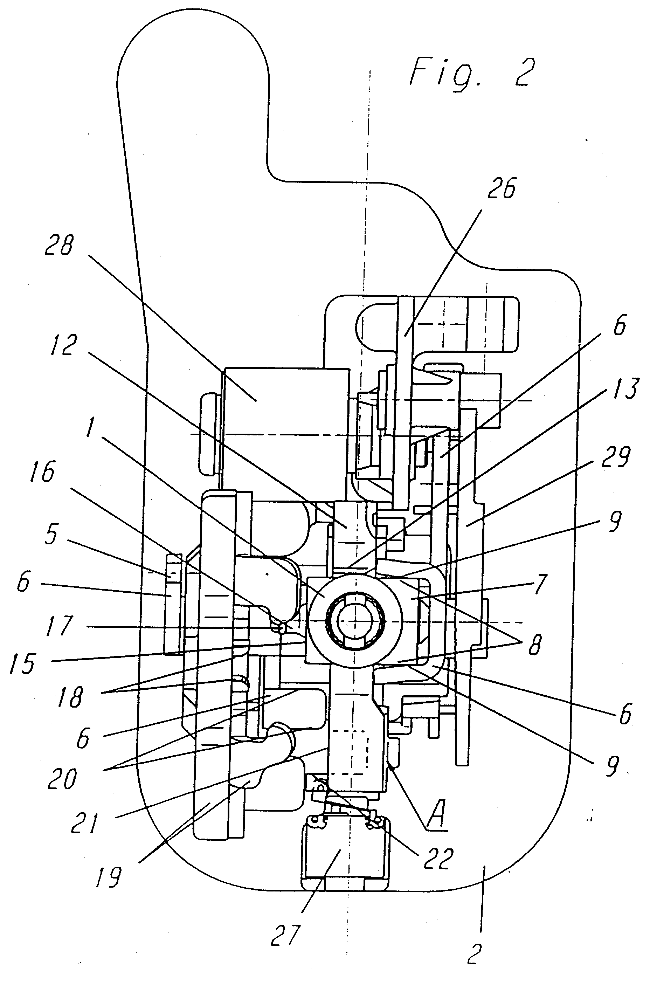

Für seine Schaltfunktionen in der Schrittschaltgasse besitzt der Wählhebel 1 an einem anderen Schenkel 15 seines O-förmig gestalteten unteren Abschnitts einen Fortsatz 16 mit ersten Wirkflächen 17, die durch das Schwenken des Wählhebels 1 mit entsprechenden Wirkflächen 18 (Figur 2) einer Schrittschalteinrichtung 19 formschlüssig in Eingriff kommen. In die Schrittschaltgasse geschwenkt, kann der Wählhebel 1 parallel zur Fahrstufenwählgasse um seine erste Achse 3 in Fahrzeuglängsrichtung von seiner Mittelstellung aus nach vorne und hinten bewegt werden. Die Schwenkbewegung erfolgt gegen die Kraft einer nicht dargestellten Feder, die in der Schrittschalteinrichtung 19 untergebracht ist. Diese Feder stellt den Wählhebel 1 immer wieder in die Mittelstellung zurück.

In der Schrittschalteinrichtung 19 befindet sich auch eine nicht gezeichnete Sensoreinrichtung, die die Schaltsignale aus den Bewegungen des Wählhebels 1 an ein nicht gezeichnetes Getriebesteuergerät weiterleitet, das diese verarbeitet. Bei einer Bewegung des Wählhebels 1 in Fahrtrichtung wird der nächsthöhere Gang eingeschaltet, bei einer Bewegung des Wählhebels 1 entgegen der Fahrtrichtung wird der nächstniedrigere Gang eingelegt.

Wie Figur 2 zeigt, kann der Wählhebel 1, der sich in der Fahrstufenwählgasse befindet, nur in einer einzigen Stellung in dieser Gasse in die Schrittschaltgasse geschwenkt werden, nämlich dann, wenn gewährleistet ist, daß seine ersten Wirkflächen 17 mit den entsprechenden Wirkflächen 18 der Schrittschalteinrichtung 19 in Eingriff kommen können. Da sich die Schrittschalteinrichtung 19 in Ruhestellung immer in derselben Mittelstellung befindet, muß der Wählhebel 1 in der Fahrstufenwählgasse, vor seinem Schwenken in die Schrittschaltgasse, in die dafür entsprechende Position gebracht werden. Befindet er sich nicht in dieser Position, wird verhindert, daß der Wählhebel 1 in die Schrittschaltgasse geschwenkt werden kann. Dazu sind am Betätigungshebel 6 vierte Wirkflächen 20 angebracht, die beim Schwenken des Wählhebels 1 in die Schrittschaltgasse eine formschlüssige Verbindung mit einer Ausnehmung 21 (gestrichelt dargestellt) in der Kulisse 12 bilden. Diese Ausnehmung 21 ermöglicht einerseits das Verschwenken der Kulisse 12 in die Schrittschaltgasse und blockiert andererseits den Betätigungshebel 6, wenn sich der Wählhebel 1 in der Schrittschaltgasse befindet. Um die Position des Wählhebels 1, aus der ein Verschwenken in die Schrittschaltgasse möglich ist, leichter aufzufinden, besitzt die Kulisse 12 eine Anschlagfläche 22, die die Längsbewegung des Wählhebels 1 in der Fahrstufenvorwählgasse durch Zusammenwirken mit den vierten Wirkflächen 20 des Betätigungshebels 6 an der Stelle begrenzt, an der das Hin- und Herschalten zwischen den Schaltgassen möglich ist.

An einer Stelle, die in Figur 2 durch einen Pfeil mit dem Bezugszeichen A gekennzeichnet ist, befindet sich eine in dieser Ansicht verdeckte Rasteinrichtung zwischen Kulisse 12 und Rahmen 2, die die Positionen der beiden Schaltgassen festlegt.

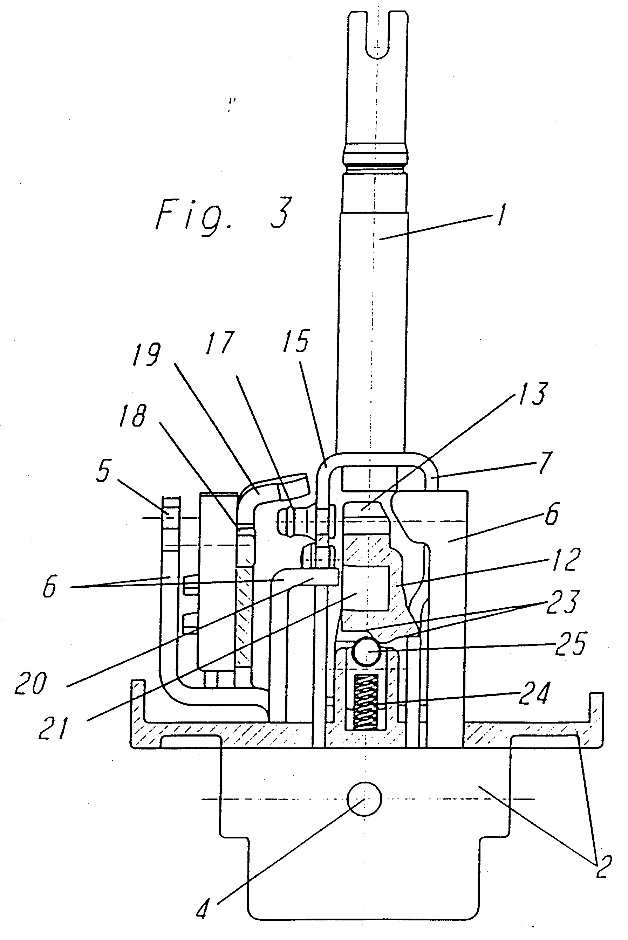

Figur 3 zeigt, daß die Kulisse 12 Rastmittel besitzt, die mit entsprechenden Rastmitteln am Rahmen 2 unter Federbelastung in Eingriff kommen und die Position des Wählhebels 1 für jede Schaltgasse in Fahrzeugquerrichtung festlegen. Die Rastmittel an der Kulisse 12 sind Ausnehmungen 23, in die ein durch eine Feder 24 belastetes, am Rahmen 2 beweglich gelagertes Element 25 mit seiner zylinderförmigen Oberfläche als entsprechendes Rastmittel eingreift.

Figur 2 zeigt außerdem noch weitere Elemente der Wähleinrichtung, nämlich einen elektrischen Stellungsgeber 27, der mit der Kulisse 12 zusammenwirkt, zum Ermitteln der Schaltgasse, in der sich der Wählhebel 1 befindet. Desweiteren einen Elektromagneten 28 einer Shiftlockeinrichtung, die das Schalten des Wählhebels 1 in der Fahrstufenwählgasse durch formschlüssiges Zusammenwirken mit dem Betätigungshebel 6 verhindert, wenn zum Beispiel die Fußbremse des Fahrzeuges nicht betätigt ist, der Wählhebel 1 aber aus der Stellung P herausbewegt werden soll.

Ein Hebel 29 einer Interlockeinrichtung blockiert dann über nicht gezeichnete Umlenkmittel das Abziehen des Zündschlüssels, wenn nicht die Fahrstufe P eingelegt ist. Die Integration der Shiftlock- und Interlockeinrichtungen an einem Trägerbock 26 in die Wähleinrichtung ist dadurch sehr einfach verwirklicht und ermöglicht trotzdem einen kompakten Aufbau der Wähleinrichtung.

## Patentansprüche

1. Wähleinrichtung, für ein Automatikgetriebe eines Kraftfahrzeugs, mit Schaltgassen, insbesondere zum Vorwählen der einzelnen Fahrstufen im Automatikbetrieb und zum schrittweisen Schalten der Gänge im manuellen Betrieb, mit einem in einem fahrzeugfesten Rahmen (2) über eine erste und eine zweite Achse (3, 4) in Fahrzeuglängs- und -querrichtung schwenkbar gelagerten Wählhebel (1), der durch Schwenken um die erste Achse (3) in jeweils einer der parallel verlaufenden Schaltgassen in Fahrzeuglängsrichtung bewegbar ist und durch Schwenken um die zweite Achse (4) in Fahrzeugquerrichtung zwischen diesen Schaltgassen hin- und herschaltbar ist, dadurch gekennzeichnet, daß die zweite Achse (4) im fahrzeugfesten Rahmen (2) gelagert ist und durch eine Kulisse (12) gebildet wird, an der der Wählhebel (1) über die erste Achse (3) gelagert ist.

2. Wähleinrichtung nach Anspruch 1, dadurch gekennzeichnet, daß die erste und die zweite Achse (3, 4) in derselben Ebene liegen.

3. Wähleinrichtung nach einem der vorhergehenden Ansprüche, dadurch gekennzeichnet, daß der Wählhebel (1) erste und zweite Wirkflächen (17, 8) besitzt, wobei die ersten (17) durch sein Verschwenken um die zweite Achse (4) in einer Schaltgasse für Schrittschaltung mit entsprechenden Wirkflächen (18) einer Schrittschalteinrichtung (19) in Eingriff kommen und mit diesen eine erste formschlüssige Verbindung bilden und die zweiten Wirkflächen (8) durch sein Verschwenken um die zweite Achse (4) in einer Schaltgasse zum Vorwählen der einzelnen Fahrstufen mit entsprechenden dritten Wirkflächen (9) einer Fahrstufenvorwähleinrichtung in Eingriff kommen und mit diesen eine zweite formschlüssige Verbindung bilden.

4. Wähleinrichtung nach Anspruch 3, dadurch gekennzeichnet, daß sich die Kulisse (12) von ihrer Lagerstelle im Rahmen (2) nach oben erstreckt und der untere Abschnitt des Wählhebels (1) U-förmig bis zu seiner Lagerachse (erste Achse 3) um die Kulisse (12) herumgreift, wobei die Kulisse (12) an ihrer oberen Fläche Rastnasen (13) aufweist, die mit einer am Wählhebel (1) ausgebildeten Sperreinrichtung zusammenwirken.

5. Wähleinrichtung nach Anspruch 3 oder 4, dadurch gekennzeichnet, daß Wählhebel (1) und Kulisse (12) von unten durch einen U-förmigen Betätigungshebel (6) der Fahrstufenwähleinrichtung seitlich umgriffen werden, der ebenfalls durch eine Achse (10, 11) in Fahrzeuglängsrichtung schwenkbar am fahrzeugfesten Rahmen (2) festgelegt ist und dritte und vierte Wirkflächen (9, 20) besitzt, wovon beim Schwenken des Wählhebels (1) um die zweite Achse (4) die dritten Wirkflächen (9) des Betätigungshebels (6) mit den zweiten Wirkflächen (8) des Wählhebels (1) in der Schaltgasse zum Vorwählen der Fahrstufen die zweite formschlüssige Verbindung eingehen, damit sich beide in dieser Schaltgasse miteinander bewegen, während die vierten Wirkflächen (20) des Betätigungshebels (6) bei Stellung des Wählhebels (1) in der Schaltgasse für Schrittschaltung eine formschlüssige Verbindung zur Kulisse (12) bilden, die die Verschwenkbewegung des Betätigungshebels (6) blockiert.

6. Wähleinrichtung nach Anspruch 5, dadurch gekennzeichnet, daß die erste Achse (3) des Wählhebels (1) und die Achse des Betätigunghebels (10, 11) kongruent sind, wenn sich der Wählhebel (1) in der Schaltgasse zum Vorwählen der einzelnen Fahrstufen befindet.

7. Wähleinrichtung nach Anspruch 5 oder 6, dadurch gekennzeichnet, daß die Kulisse (12) eine Anschlagfläche (22) besitzt, die die Längsbewegung des Wählhebels (1) in der Schaltgasse zum Vorwählen der Fahrstufen durch Zusammenwirken mit den vierten Wirkflächen (20) des Betätigungshebels (6) an der Stelle begrenzt, an der das Hin- und Herschalten zwischen den Schaltgassen möglich ist.

8. Wähleinrichtung nach einem der Ansprüche 1 bis 7, dadurch gekennzeichnet, daß die Kulisse (12) Rastmittel besitzt, die mit einem entsprechenden Rastmittel am Rahmen (2) die Position des Wählhebels (1) für jede Schaltgasse in Fahrzeugquerrichtung festlegen.

9. Wähleinrichtung nach Anspruch 8, dadurch gekennzeichnet, daß die Rastmittel an der Kulisse (12) Ausnehmungen (23) sind und das entsprechende Rastmittel am Rahmen (2) durch ein an diesem unter Belastung einer Feder (24) gelagertes Element (25) mit abgerundeter Oberfläche gebildet wird.

## Claims

1. A selector device for an automatic transmission on a motor vehicle, comprising gear-shift channels, especially for pre-selecting the individual gear stages in automatic operation and for stepwise gear-shifting in manual operation, comprising a selector lever (1) mounted on a first and a second pivot (3, 4) in a frame (2) secured to the vehicle so as to be rotatable in the longitudinal and transverse direction of the vehicle, the lever being movable by rotating around the first pivot (3) in a respective one of the parallel gear-shifting channels in the longitudinal direction of the vehicle whereas the lever can be rotated around the second pivot (4) in the transverse direction of the vehicle so as to switch between the said channels, characterised in that the second pivot (4) is mounted in the frame (2) secured to the vehicle and is in the form of a connecting link (12) on which the selector lever (1) is mounted via the first pivot (3).

2. A selector device according to claim 1, characterised in that the first and the second pivot (3, 4) lie in the same plane.

3. A selector device according to any of the preceding claims, characterised in that the selector lever (1) has first and second operating surfaces (17, 8), the first surfaces (17) rotating around the second pivot (4) in a manual gear-shifting channel so as to come into engagement with corresponding operative surfaces (18) on a manual gear-shifting device (19) and forming a first positive connection therewith, whereas the second operative surfaces (8) rotate round the second pivot (4) in a channel for pre-selecting the individual gear stages so as to come into contact with corresponding third operative surfaces (9) on a gear-stage pre-selector device and form a second positive connection therewith.

4. A selector device according to claim 3, characterised in that the link (12) extends upwards from its bearing in the frame (2) and the lower portion of the selector lever (1) extends in a U-shape up to its bearing axis (first pivot 3) around the link (12), and the upper surface of the link (12) is formed with catches (13) which co-operate with a locking device formed on the selector lever (1).

5. A selector device according to claim 3 or 4, characterised in that the selector lever (1) and the link (12) are surrounded laterally and from beneath by a U-shaped actuating lever (6) on the gear-stage selector device, the lever (6) likewise being secured by a pivot (10, 11) in the longitudinal direction of the vehicle so as to be pivotable on the frame (2) secured to the vehicle, the lever (6) having third and fourth operative surfaces (9, 20), and when the selector lever (1) rotates around the second pivot (4) the third operative surfaces (9) of the actuating lever (6) make the second positive connection with the second operative surfaces (8) of the selector lever (1) in the channel for pre-selecting the gear stages, so that the two levers move together in the said channel, whereas when the selector lever (1) is in the channel for manual gear-shifting the fourth operative surfaces (20) of the actuating lever (6) form a positive connection to the link (12), which blocks the rotation of the actuating lever (6).

6. A selector device according to claim 5, characterised in that the first pivot (3) of the selector lever (1) coincides with the pivot of the actuating lever (10, 11) when the selector lever (1) is in the channel for pre-selecting the individual gear stages.

7. A selector device according to claim 5 or claim 6, characterised in that the link (12) has an abutment surface (22) which co-operates with the fourth operative surfaces (20) of the actuating lever (6) so as to limit the longitudinal motion of the selector lever (1) in the channel for pre-selecting the gear stages to the place where switching over between the channels is possible.

8. A selector device according to any of claims 1 to 7, characterised in that the link (12) has locking means which co-operate with a corresponding locking means on the frame (2) so as to fix the position of the selector lever (1) for each channel in the transverse direction of the vehicle.

9. A selector device according to claim 8, characterised in that the locking means on the link (12) are recesses (23) and the corresponding locking means on the frame (2) is formed by a component (25) having a rounded surface and mounted on the frame (2) and loaded by a spring (24).

## Revendications

1. Dispositif sélecteur pour une boîte de vitesses automatique de véhicule automobile comprenant des couloirs de commutation notamment pour présélectionner les différents niveaux de conduite en mode automatique et pour commuter pas à pas les rapports de vitesse en mode manuel, comprenant,
- un cadre (2) solidaire du véhicule permettant à un levier sélecteur (1) monté pivotant dans la direction longitudinale du véhicule et dans sa direction transversale autour d'un premier et d'un second axe (3, 4), par basculement autour du premier axe (3) de passer dans l'un des couloirs de commutation parallèle à l'axe longitudinal du véhicule et par basculement autour du second axe (4) de commuter dans la direction transversale du véhicule entre ces deux couloirs de commutation,
caractérisé en ce que
le second axe (4) est monté dans le cadre (2) du véhicule et est formé par une coulisse (12) sur laquelle est monté le levier sélecteur (1) par l'intermédiaire du premier axe (3).

2. Dispositif sélecteur selon la revendication 1,
caractérisé en ce que
le premier et le second axe (3, 4) sont situés dans le même plan.

3. Dispositif sélecteur selon l'une des revendications précédentes,
caractérisé en ce que
le levier sélecteur (1) possède une première et une seconde surface active portant les références (17, 8), la première surface (8) venant en prise par basculement autour du second axe (4) dans un couloir de commutation pour la commutation pas à pas, avec les surfaces actives correspondantes (18) d'une installation de commutation pas à pas (19) et formant avec celle-ci une première liaison par la forme, et la seconde surface active (8) par son basculement autour du second axe (4) dans un couloir de commutation servant à la présélection des différents niveaux de conduite, en venant en prise avec une troisième surface active (9) d'une installation de présélection de niveau de conduite, en formant avec celle-ci une seconde liaison par la forme.

4. Dispositif sélecteur selon la revendication 3,
caractérisé en ce que
la coulisse (12) s'étend vers le haut à partir de son palier dans le cadre (2) et le segment inférieur du levier sélecteur (1) entoure suivant une forme en U jusqu'à son axe de palier (premier axe 3) la coulisse (12), cette coulisse (12) ayant des becs d'encliquetage (13) dans sa surface supérieure pour coopérer avec un dispositif de blocage réalisé sur le levier sélecteur (1).

5. Dispositif sélecteur selon la revendication 3 ou 4,
caractérisé en ce que
le levier sélecteur (1) et la coulisse (12) sont entourés par en dessous par un levier d'actionnement (6) en forme de U appartenant à l'installation de sélection de niveau de conduite, ce levier étant également monté basculant sur le cadre (2) solidaire du véhicule autour d'un axe (10, 11), le basculement se faisant dans la direction longitudinale du véhicule, et il possède les troisième, quatrième surfaces actives (9, 20) et lors du basculement du levier sélecteur (1) autour du second axe (4), la troisième surface active (9) du levier d'actionnement (6) vient coopérer avec la seconde surface active (8) du levier sélecteur (1) dans le couloir de commutation servant à la présélection du niveau de conduite, pour former une seconde liaison par la forme, pour que les deux surfaces se déplacent en commun dans ce couloir de commutation alors que la quatrième surface active (20) du levier d'actionnement (6), lorsque le levier sélecteur (1) se trouve dans le couloir de commutation servant à la commutation pas à pas, forme une liaison par la forme avec la coulisse (12) qui bloque le mouvement de basculement du levier d'actionnement (6).

6. Dispositif sélecteur selon la revendication 5,
caractérisé en ce que
le premier axe (3) du levier sélecteur (1) et l'axe du levier d'actionnement (10, 11) sont coaxiaux lorsque le levier sélecteur (1) se trouve dans le couloir de commutation servant à la présélection des différents niveaux de conduite.

7. Dispositif sélecteur selon la revendication 5 ou 6,
caractérisé en ce que
la coulisse (12) possède une surface de butée (22) qui limite le mouvement longitudinal du levier sélecteur (1) dans le couloir de commutation servant à la présélection des niveaux de conduite, en coopérant avec la quatrième surface active (20) du levier d'actionnement (6) pour limiter à l'endroit où il est possible de passer d'un couloir de commutation à l'autre.

8. Dispositif sélecteur selon l'une des revendications 1 à 7,
caractérisé en ce que
la coulisse (12) comporte des moyens d'encliquetage qui fixent avec moyen d'encliquetage correspondant du cadre (2), la position du levier sélecteur (1) pour chaque couloir de commutation dans la direction transversale du véhicule.

9. Dispositif sélecteur selon la revendication 8,
caractérisé en ce que
les moyens d'encliquetage de la coulisse (12) sont des cavités (23) et ceux du cadre (2) sont constitués par un élément (25) à surface arrondie, montés en étant chargés par un ressort (24).
